(19) Europäisches Patentamt
European Patent Office
Office européen des brevets

(11) **EP 1 661 236 B1**

(12) **EUROPÄISCHE PATENTSCHRIFT**

(45) Veröffentlichungstag und Bekanntmachung des Hinweises auf die Patenterteilung:
**25.07.2007 Patentblatt 2007/30**

(21) Anmeldenummer: **04764515.5**

(22) Anmeldetag: **26.08.2004**

(51) Int Cl.:
***H02P 6/00*** *(2006.01)*

(86) Internationale Anmeldenummer:
**PCT/EP2004/009540**

(87) Internationale Veröffentlichungsnummer:
**WO 2005/025046 (17.03.2005 Gazette 2005/11)**

(54) **VERFAHREN UND SCHALTUNGSANORDNUNG FÜR DIE SENSORLOSE ERMITTLUNG VON LASTZUSTÄNDEN VON SYNCHRONEN LINEARMOTOREN**

METHOD AND CIRCUIT ARRANGEMENT FOR THE SENSORLESS DETECTION OF LOAD STATES OF SYNCHRONOUS LINEAR MOTORS

PROCEDE ET CIRCUIT PERMETTANT DE DETERMINER SANS DETECTEUR DES ETATS DE CHARGE DE MOTEURS LINEAIRES SYNCHRONES

(84) Benannte Vertragsstaaten:
**AT DE FR**

(30) Priorität: **05.09.2003 DE 10341511**

(43) Veröffentlichungstag der Anmeldung:
**31.05.2006 Patentblatt 2006/22**

(73) Patentinhaber: **Brückner Maschinenbau GmbH 83313 Siegsdorf (DE)**

(72) Erfinder:
• **SIEBER, Bernd 83313 Siegsdorf (DE)**
• **OEDL, Günter A-5020 Salzburg (AT)**

(74) Vertreter: **Bauer, Friedrich et al Andrae Flach Haug Adlzreiterstrasse 11 83022 Rosenheim (DE)**

(56) Entgegenhaltungen:
DE-A- 2 356 679       US-A- 3 736 880
US-A- 4 303 870

• GU B-G ET AL: "A VECTOR CONTROL SCHEME FOR A PM LINEAR SYNCHRONOUS MOTOR IN EXTENDED REGION" IEEE TRANSACTIONS ON INDUSTRY APPLICATIONS, IEEE INC. NEW YORK, US, Bd. 39, Nr. 5, September 2003 (2003-09), Seiten 1280-1286, XP001178073 ISSN: 0093-9994

## Beschreibung

Die Erfindung betrifft ein Verfahren zur Regelung von synchronen Linearmotoren, insbesondere für Linearantriebe in Folienstreckanlagen, gemäß dem Oberbegriff der Ansprüche 1 und 2, sowie eine Schaltungsanordnung zur Durchführung dieses Verfahrens gemäß dem Oberbegriff der Ansprüche 15 und 16.

Synchrone Linearmotoren, die beispielsweise für das Verfahren von Kluppen in Folienstreckanlagen verwendet werden, müssen derart geregelt werden, dass die Bewegung des Sekundärteiles relativ zum ruhenden Primärteil auf möglichst genaue, stabile und energiesparende Weise erfolgt. Besondere Anforderungen ergeben sich hierbei, wenn das bewegte Sekundärteil nicht immer, sondern nur zeitweise mit dem Primärteil in Wirkverbindung ist, d.h., wenn das Sekundärteil über das Primärteil hinaus verfahren oder von einem externen Bereich in den Bereich des Primärteiles verfahren wird.

Sensorlose Regelungen von Synchronmotoren sind aus einer Fülle von Patenten und Veröffentlichungen bekannt. Gegenstand und Ziel ist dabei die Regelung der Bewegungs- und Lastzustände nach einem vorgegebenen Kriterium.

· M.J. Corley und R.D. Lorenz beschreiben in dem Artikel "Rotor Position and Velocity Estimation for a Permanent Magnet Synchronous Machine at Standstill and High Speeds" (IEEE 1996 Seiten 36 bis 41) ein Verfahren zur Schätzung der Position in einer rotierenden Synchronmaschine aus den gemessenen Werten von Strömen mittels einer Beobachterstruktur nach Luenberger. Stator und Rotor befinden sich hierbei stets im Wirkbereich.

· P. Vas gibt in dem Buch "Sensorless Vector and Direct Torque Control" (Oxford University Press 1998) einen Überblick über den aktuellen Stand der Lösungen zur Bestimmung der Position in synchronen rotierenden Motoren. Auch hier befinden sich Stator und Rotor stets im Wirkbereich.

· Patentschrift WO 99/39430 beschreibt die rotororientierte Regelung von rotierenden synchronen Motoren unter Ausnutzung der räumlichen magnetischen Leitwertschwankungen zur Bestimmung der Rotorlage. Aufgabe ist hier die Regelung des Motors ohne gesonderte Sensoren zur Erfassung der Rotorlage. Die Leitwertschwankungen sind jedoch klein im Vergleich zu der Wirkung der Gegenspannung aus dem Rotor.

· Patentschrift WO 00/79675 hat die Aufgabe der Erkennung einer Last an transformatorischen Schaltungsanordnungen. Hier wird die Idee der Lasterkennung nur in ruhenden Anordnungen angewandt.

· Patentschrift DE 19747412 A1 beschreibt ein Verfahren zur Synchronisierung von Elektromotorischer Kraft und Stromraumzeiger für digital feldorientiert geregelte Synchronantriebe mit Linearmotoren. Hier erfolgt die Bestimmung der richtigen Zuordnung der beiden genannten Größen im Stillstand und unter Zuhilfenahme eines Lagesensors. Das Verfahren ist nicht geeignet bei Verlust der detektierten Bezugslage.

· Patentschrift DE 19751375 A1 beschreibt ein Verfahren zur Rekonstruktion von Lastkräften und Beschleunigungen bei elektrischen Antrieben zur Nutzung in einem geschlossenen Drehzahl- oder Lageregelkreis. Die mit einem Luenberger- Beobachter rekonstruierten Kräfte bzw. Momente werden in einem Regelkreis zur Lage- oder Kraft- oder Momentregelung aufgeschaltet.

· In DE 19634449 C2 wird eine Steuereinrichtung mit einer Vielzahl von darüber angesteuerten Umrichtern zum linearen Antrieb einer Vielzahl von Kluppen in Folienreckanlagen beschrieben. Eine Vielzahl von einzeln ansteuerbaren Abschnitten aus einem Strang von Linearmotoren kann mit dieser Steuereinrichtung so angesteuert werden, dass auf ein in einem Abschnitt stehendes Sekundärteil separat zugegriffen werden kann. Die resultierende Durchflutungswelle des Primärteiles der Linearmotoren folgt dem von der Steuereinrichtung vorgegeben Profil des Phasenwinkels über der Zeit und gibt somit die Geschwindigkeit vor. Die Umrichter speisen entsprechend der Vorgabe Ströme mit konstanten Amplituden ein. Bei konstantem Fluss bestimmt die Stromamplitude über der Zeit die maximal wirksame Kraft.

In US-A-4,303,870 wird die Blindleistung in Abhängigkeit von Gebrauchsparameter wie Motorstrom und -spannung kompensiert."

Mittels verschiedener Ansätze bestimmen die bekannten sensorlosen Regelanordnungen die Bewegungszustände allein aus den Strömen und Spannungen ohne weitere gesonderte Sensoren. Bei allen bekannten Anordnungen befinden sich ein, durch in der Regel mit Drehstrom gespeistes, Primärteil und ein Sekundärteil mit elektrischer oder permanentmagnetischer Erregung ständig in Wechselwirkung, so dass zwischen beiden eine Kraft erzeugt werden kann.

Nachteilig ist dabei, dass bei Antriebssystemen mit vielen bewegten Sekundärteilen, die unabhängig voneinander vorgegebenen Bewegungsprofilen folgen sollen, unter den Primärteilen nur zeitweise auch Sekundärteile stehen. Beim Einlauf eines Sekundärteiles in ein Primärteil müssen die Regelanordnungen dann wegen der geringen Aufenthaltszeiten im Primärteil sehr schnell die Bewegungszustände erfassen. Das leisten die bekannten Anordnungen nicht.

Außerdem müssen bei mehreren in Fahrtrichtung liegenden separat gespeisten Primärteilen mit auch unterschiedlicher Länge die speisenden Umrichter nach dem Verlassen eines Sekundärteiles für das nächste eintretende Sekundärteil wieder mindestens die richtige Phasenlage der Ströme und/oder auch deren Höhe und/oder die Geschwindigkeit der resultierenden Stromwelle herstellen.

Bei bekannten gesteuerten synchronen Linearmotoren mit einer Speisung mit Konstantstrom aus einem Umrichter kann der Stromregler die Unterschiede in den Impedanzen und Spannungen durch die Anwesenheit oder Abwesenheit des Sekundärteiles sehr schnell ausregeln. Bei solchen An-Ordnungen ändert sich der Lastwinkel durch die an den Sekundärteilen angreifenden äußeren Kräfte entsprechend einer Sinusfunktion der Kraft über dem Lastwinkel. Zur Erhaltung einer ausreichenden Stabilität gegen das Überschreiten des Scheitelwertes der Kraft, oder anders ausgedrückt eines Lastwinkels von mehr als $\pm$ 90°, wird vorsorglich der eingeprägte Strom ausreichend hoch eingestellt. Der Strom stellt bei einem konstanten Fluss des Sekundärteiles auch gleichzeitig ein Maß für die Scheitelkraft dar.

Nachteilig bei einer solchen Anordnung ist,

· dass keinerlei Informationen über den tatsächlichen Lastzustand vorliegen, so dass die Einspeisung des Konstantstroms ohne Berücksichtigung des tatsächlichen Lastzustandes erfolgt
· dass zur Erhaltung der Stabilität ein hoher Strom eingespeist werden muss und dadurch die Verluste in den Primärteilen wegen der quadratischen Abhängigkeit vom Strom groß sind
· dass die statische Stabilitätsgrenze bei einem Lastwinkel von $\pm$ 90° überschritten werden kann, wenn die äußere Last zu groß wird
· dass die dynamische Stabilitätsgrenze bei einem Lastwinkel von $\pm$ 180° überschritten werden kann, wenn die äußere Last zu groß wird und die Sekundärteile dann entweder zum Stillstand kommen oder zumindest ihre Stellung um wenigstens mehr als $\pm$ 180° ändern.

Der Erfindung liegt von daher die Aufgabe zugrunde, ein Verfahren der eingangs genannten Art zu schaffen, mit dem die Fahrweise von synchronen Linearmotoren auf möglichst genaue, stabile und energiesparende Weise insbesondere auch dann geregelt werden kann, wenn sich das Sekundärteil nur zeitweise im Wirkbereich des Primärteiles befindet. Weiterhin soll eine Schaltungsanordnung zur Durchführung dieses Verfahrens geschaffen werden.

Diese Aufgabe wird erfindungsgemäß durch die Merkmale der Ansprüche 1 und 2 bzw. 15 und 16 gelöst. Vorteilhafte Ausführungsformen der Erfindung sind in den weiteren Ansprüchen beschrieben.

Bei einer ersten Alternative des erfindungsgemäßen Verfahrens wird die zwischen dem Primärteil und dem Sekundärteil wirkende Kraft aus den im Umrichter gemessenen oder berechneten Strömen und Spannungen bestimmt, indem das Integral aus der Wirkleistung über eine Zeit zwischen zwei aus einer übergeordneten Steuerung erzeugten Impulsen berechnet und dieses Integral durch die wirksame Länge des Primärteiles geteilt wird. Dabei wird der Strom in der f-Achse auf einen vorgegebenen Wert und der Strom in der g-Achse zu Null geregelt.

Gemäß einer zweiten Alternative wird die Aufgabe durch ein Verfahren gelöst, bei dem die zwischen dem Primärteil und dem Sekundärteil wirkende Kraft aus den im Umrichter gemessenen oder berechneten Strömen und Spannungen bestimmt wird, indem die Summe der Spannungen in der f-Achse, vermindert um den Spannungsabfall an dem Widerstand des Stranges im Primärteil, während der Zeit zwischen zwei von einer übergeordneten Steuerung erzeugten Impulsen berechnet und diese Summe mit dem Strom in der f-Achse, dem Zeitintervall und dem Kehrwert der Länge des Primärteiles multipliziert wird. Dabei wird der Strom in der f-Achse auf einen vorgegebenen Wert und der Strom in der g-Achse zu Null geregelt.

Für das erfindungsgemäße Verfahren ist es charakteristisch, dass die zwischen dem Primärteil und dem Sekundärteil wirkende tatsächliche Kraft sensorlos aus Strömen und Spannungen bestimmt wird, die in einer zweiachsigen Darstellung in einem am Sekundärteil orientierten Koordinatensystem beschrieben und auf das ruhende Primärteil transformiert werden. Die Kraft wird hierbei entweder mittels des Integrals aus der Wirkleistung oder mittels der Summe der Spannungen in der f-Achse während einer vorbestimmten Zeit errechnet, die zwischen zwei von einer übergeordneten Steuerung erzeugten Impulsen liegt. Dadurch, dass der Strom in der f-Achse auf einem vorgegebenen Wert und der Strom in der g-Achse zu Null geregelt wird, wird die Bestimmung der Kraft vereinfacht.

Durch das erfindungsgemäße Verfahren lassen sich die folgenden Vorteile ohne zusätzliche Elemente entweder außerhalb des Umrichters oder innerhalb des Umrichters durch eine entsprechende Konfiguration erzielen:

· Die mittlere Kraft auf ein Sekundärteil lässt sich für einen Durchlauf durch ein Primärteil bestimmen
· Bei mehreren von einem Sekundärteil durchfahrenen, getrennt gespeisten Primärteilen lässt sich so ein Kraftprofil bestimmen und erlaubt, damit die tatsächlich herrschenden Lasten zu bestimmen
· Wenn die bestimmte Kraft höher als erwartet ausfällt, dann kann der Strom als eine Stabilitätsreserve in beliebig auswählbaren Primärteilen durch neue Sollwertvorgaben für den Strom durch die Steuerung erhöht werden

· Der mittlere Lastwinkel lässt sich für einen Durchlauf durch ein Primärteil bestimmen

· Der Strom in den Sekundärteilen lässt sich entsprechend den tatsächlich benötigten Kräften der Sekundärteile reduzieren, womit Energie gespart werden kann

· Eine auftretende Überschreitung der Stabilitätsgrenze (Pull Out) vor dem betrachteten Primärteil kann detektiert werden

· Diese Information kann ebenfalls zur Erhöhung der Ströme in ausgewählten Primärteilen als Stabilitätsreserve genutzt werden

· Nutzung des Wissens aus Daten- und Wissensspeichern ist möglich

· Selbstlernende Systeme sind möglich

Vorteilhafter Weise wird die Blindkraft berechnet, indem die Summe der Spannungen in der g-Achse vermindert um den induktiven Spannungsabfall an den Induktivitäten im Primärteil während der Zeit zwischen den zwei von der übergeordneten Steuerung erzeugten Impulsen berechnet und die so erhaltene Summe mit dem Strom in der f-Achse, dem Zeitintervall und dem Kehrwert der wirksamen Länge des Primärteiles multipliziert wird. Aus der so ermittelten Blindkraft lässt sich der Lastwinkel bestimmen, indem der Tangens des Quotienten von Kraft zu Blindkraft berechnet wird. Hierdurch lässt sich der Abstand von der statischen oder dynamischen Stabilitätsgrenze bestimmen, so dass gegebenenfalls durch Verringerung des eingespeisten Konstantstromes Energie gespart oder durch Erhöhung des Konstantstromes verhindert werden kann, dass die Stabilitätsgrenzen überschritten werden.

Bei einer ersten Alternative der Schaltungsanordnung zur Durchführung des erfindungsgemäßen Verfahrens ist ein Rechenblock vorgesehen, in dem eine Transformation von auf das Sekundärteil bezogenen Strömen und Spannungen auf das Primärteil stattfindet, wobei die transformierten Ströme und Spannungen in einem zweiachsigen Koordinatensystem mit einer reellen f-Achse und imaginären g-Achse beschrieben sind. Weiterhin enthält der Rechenblock eine Einrichtung zur Berechnung der zwischen dem Primärteil und dem Sekunddärteil wirkenden Kraft aus den im Umrichter gemessenen oder berechneten Strömen und Spannungen durch Bildung des Integrals aus der Wirkleistung über eine Zeit zwischen zwei von einer übergeordneten Steuerung erzeugten Impulsen und durch Teilen des so gebildeten Integrals durch eine wirksame Länge des Primärteiles. Ferner ist eine Einrichtung vorgesehen, welche den Strom in der f-Achse auf einen vorgegebenen Wert und den Strom in der g-Achse zu Null regelt.

Gemäß einer zweiten Alternative der erfindungsgemäßen Schaltungsanordnung enthält der Rechenblock eine Einrichtung zur Berechnung der zwischen dem Primärteil und dem Sekundärteil wirkenden Kraft aus den im Umrichter gemessenen oder berechneten Strömen und Spannungen durch Bildung der Summe der Spannungen in der f-Achse, vermindert um den Spannungsabfall an dem Widerstand des Stranges im Primärteil, während der Zeit zwischen zwei von einer übergeordneten Steuerung erzeugten Impulsen, und durch Multiplikation der so gebildeten Summe mit dem Strom in der f-Achse, dem Zeitintervall und dem Kehrwert der wirksamen Länge des Primärteiles. Auch hier ist eine Einrichtung vorgesehen, welche den Strom in der f-Achse auf einen vorgegebenen Wert und den Strom in der g-Achse zu Null regelt.

Der Rechenblock kann im Umrichter oder außerhalb des Umrichters angeordnet sein.

Die Erfindung wird nachfolgend anhand der Zeichnungen beispielhaft näher erläutert. Es zeigen:

Figur 1: eine schematische Darstellung der erfindungsgemäßen Schaltungsanordnung mit Stromreglern, einem Umrichter und einem Linearmotor,

Figur 2: eine schematische Darstellung für die Berechnung der Lastzustände, und

Figur 3: ein Diagramm zur Darstellung des prinzipiellen Verhaltens bei der Kommutierung.

Zunächst wird das allgemeine Prinzip des erfindungsgemäßen Verfahrens näher erläutert.

In einem auf das bewegte Sekundärteil des Linearmotors bezogenen Koordinatensystem, das auf den Stator transformiert ist, lassen sich die Ströme und Spannungen eines synchronen Linearmotors beschreiben. Mit dem Sekundärteil bewegen sich die reelle f- Achse und die imaginäre g-Achse des Koordinatensystems. Zwischen dem Statorsystem und dem Sekundärteil liegt der unbekannte Lastwinkel b, der die Variable in der Transformationsbeziehung bei Bezug auf den Stator bildet.

Die Leistungen ergeben sich dann aus den transformierten Strömen und Spannungen des genannten Stator-Koordinatensystemes als Komponenten für die Wirkleistung:

$$P_w = U_f \cdot I_f + U_g \cdot I_g \qquad\qquad \text{Gleichung 1}$$

und für die Blindleistung:

$$P_b = U_g \cdot I_f - U_f \cdot I_g \qquad\qquad \text{Gleichung 2}$$

Hierin bedeuten

$P_w$     Wirkleistung
$P_b$     Blindleistung
$U_f$     gemessene Spannung in der f- Achse
$U_g$     gemessene Spannung in der g- Achse
$I_f$     gemessener Strom in der f- Achse
$I_g$     gemessener Strom in der g- Achse

Von einer übergeordneten Steuerung werden zusätzlich die Parameter new_clip als Startimpuls für die Berechnung und die wirksame Länge $l_{zone}$ des Primärteiles für den zu speisenden Abschnitt vorgegeben. Zwischen zwei Impulsen new_clip vergeht die Zeit $t_{clip}$. Die Impulse new_clip geben somit einen internen Zeittakt vor. Die Zeit $t_{clip}$ kann - muss aber nicht - der Aufenthaltszeit eines Sekundärteiles im Bereich des Primärteiles entsprechen.

In der Leistungsbilanz wird die Wirkleistung innerhalb der Zeit $t_{clip}$ umgesetzt in die Verluste des Primärteiles und die auf das Sekundärteil übertragene Leistung. Unter Vernachlässigung der Eisenverluste im Primärteil sind nur die Kupferverluste $V_{cu}$ maßgebend. Mit dem Sollwert der Geschwindigkeit des Sekundärteiles $V_{clip}$, der in guter Näherung dem Mittelwert der Geschwindigkeit des Sekundärteiles entspricht, beträgt die wirksame Zonenlänge $l_{zone}$ eines Primärteiles:

$$l_{zone} = v_{clip} \cdot t_{zone} \qquad\qquad \text{Gleichung 3}$$

wobei $t_{zone}$ die wahre Aufenthaltszeit eines Sekundärteiles im Wirkbereich des Primärteiles ist.

Die Kraft $F_{clip}$ auf ein Sekundärteil kann einfach aus

$$F_{clip} = \frac{1}{n_{clip} \cdot l_{zone}} \cdot \int_0^{t_{clip}} \left( P_w(t) - V_{cu}(t) \right) dt \qquad\qquad \text{Gleichung 4}$$

berechnet werden. Die Anzahl der Sekundärteile $n_{clip}$ berücksichtigt dabei den Fall, dass mehrere Sekundärteile einer entsprechenden Anzahl von parallel eingespeisten, also elektrisch parallel geschalteten Primärteilen gegenüberstehen. Die Schreibweise der Größen als Funktion von der Zeit t unterstreicht, dass während eines Durchlaufes eines Sekundärteiles unter einem Primärteil (oder der $n_{clip}$-fachen Anzahl) die Größen ihren Wert ändern können.

Die augenblickliche Kraft während des Aufenthaltes eines Sekundärteiles unter einem Primärteil errechnet sich aus den messbaren Strömen und Spannungen aus der Gleichung 1, indem die messbaren Größen mit ihren zeitabhängigen Werten herangezogen werden und mit der augenblicklichen Geschwindigkeit dividiert wird.

Bei einer Regelung der Stromkomponenten in der Weise, dass der Strom $I_g$ zu Null und der Strom $I_f$ auf einen vorgegebenen Wert gehalten werden, lässt sich die Rechnung bedeutend vereinfachen. Die Gleichungen vereinfachen sich dann für die Wirkleistung

$$P_w = U_f \cdot I_f \qquad\qquad \textbf{Gleichung 5}$$

und für die Blindleistung

$$P_b = U_g \cdot I_f \qquad\qquad \textbf{Gleichung 6}$$

Die Kraft lässt sich aus der Gleichung 4 mit der Vereinfachung in Gleichung 5 vereinfacht durch Summation der Spannungswerte $U_g$ vermindert um den Spannungsabfall jeweils am Ende eines jeden Zeitintervalles $\Delta t$ des digitalen Reglers über die gesamte Zeit $t_{clip}$ und anschließende Multiplikation mit dem Zeitintervall selbst und dem Strom $I_f$ berechnen. Nach Division durch die Länge des Primärteiles $l_{zone}$ und die Anzahl $n_{clip}$ der Sekundärteile ergibt sich die im Mittel wirkende Kraft $F_{clip}$ während der Zeit $t_{clip}$ aus Gleichung 7.

$$F_{clip} = \frac{I_f \cdot \Delta t}{n_{clip} \cdot l_{zone}} \cdot \sum_{t=0}^{t_{clip}} (U_g - R_{str} \cdot I_f) \qquad\qquad \textbf{Gleichung 7}$$

Hierbei bedeutet $R_{str}$ der Widerstand eines Stranges des Linearmotors, transformiert in das Zweiachsensystem.

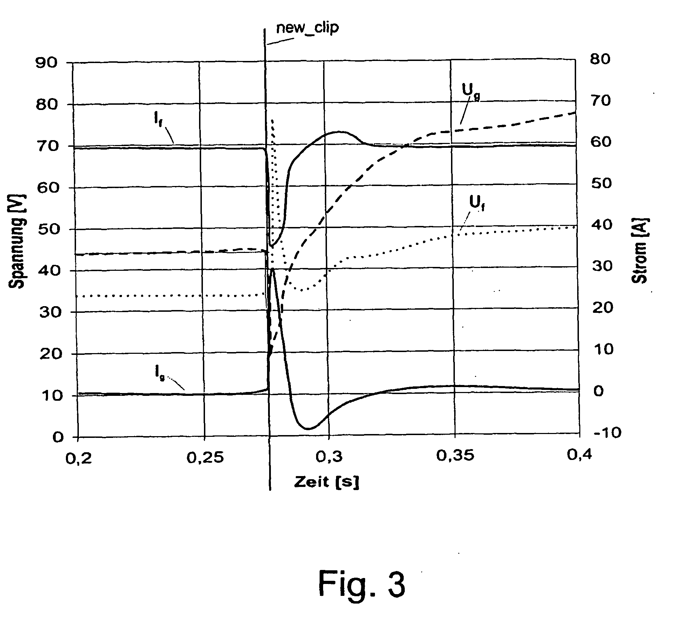

Die Phasenwinkel der Durchflutungsgrundwelle bei Eintritt des Sekundärteiles in das Primärteil und beim Austritt aus dem Primärteil können unterschiedlich sein. Für das nächste eintretende Sekundärteil muss wieder der Anfangsphasenwinkel eingestellt werden. Während dieses Wechsels der Phasenlage der Durchflutungswelle, auch als Kommutierung bezeichnet, können die genannten Bedingungen $I_f$ = Vorgabewert und $I_g$ = 0 nicht mehr erfüllt werden. Figur 3 zeigt das prinzipielle Verhalten der Ströme und Spannungen nach einem Impuls new_clip, der den Beginn der Kommutierung bestimmt, für den Fall des Auftretens einer Phasendifferenz $\alpha$.

Bei Berücksichtigung dieses Verhaltens durch eine Korrektur in der Berechnung der Kraft $F_{clip}$ entsteht eine bessere Übereinstimmung der Berechnung mit der tatsächlichen Kraft auf ein bewegtes Sekundärteil. Die Korrektur besteht entweder aus einer in einem Rechenblock abgelegten Tabelle mit Korrekturwerten in Abhängigkeit vom Sollstrom und dem Phasensprung der Ströme bei der Umschaltung, oder es wird eine Schätzung auf der Basis der bekannten Größen vorgenommen. Eine Schätzung in der einfachsten Form ist mit Gleichung 8 möglich.

$$U_{start} = \frac{I_f \cdot L_{str}}{\Delta t} \cdot (1 - \cos(\alpha)) \qquad\qquad \textbf{Gleichung 8}$$

Hierbei bedeutet $L_{str}$ die Induktivität eines Stranges des Linearmotors, transformiert in das Zweiachsensystem. Die so ermittelte Spannung $U_{start}$ wird als negativer Anfangswert für die Summenbildung in Gleichung 7 eingesetzt.

Die Blindleistung nach der oben angegebenen Gleichung 6 wächst mit der Größe des Stromes $I_f$. Mit den bereits genannten Vereinfachungen für die Berechnung der Wirkleistung kann auch eine weitere Größe, hier Blindkraft genannt, aus der Blindleistung berechnet werden. Anstelle der Spannung $U_f$ wird dann $U_g$ und anstelle des Widerstandes $R_{str}$ die mit der mittleren Winkelgeschwindigkeit multiplizierte Induktivität $L_{str}$ verwendet.

Der Tangens aus dem Quotienten der Kraft zur Blindkraft ergibt den Lastwinkel.

Die Sekundärteile können vor dem betrachteten Primärteil aus der Stromwelle ausbrechen (Pull Out). Dann steht zur erwarteten Zeit $t_{clip}$ das Sekundärteil nicht unter dem Primärteil und übt keine Wechselwirkung aus. Die Quadrate der Summen aus den um die Spannungsabfälle am Widerstand reduzierten Spannungen $U_f$ und aus den um die Spannungsabfällen an den Induktivitäten reduzierten Spannungen $U_g$ werden nach Addition mit einem Schwellwert in einem Komparator verglichen. Der Komparator gibt bei Unterschreitung des Schwellwertes eine Meldung über das Ausbrechen, z.B. "Pull Out" aus.

Unterschreitet die berechnete Kraft eine vorgegebene Schwelle, dann ermittelt ein Vergleicher das und gibt eine Meldung aus.

Ein weiteres Kriterium für einen Pull Out ist die Überschreitung einer vorgegebenen Schwelle für die berechnete Blindkraft.

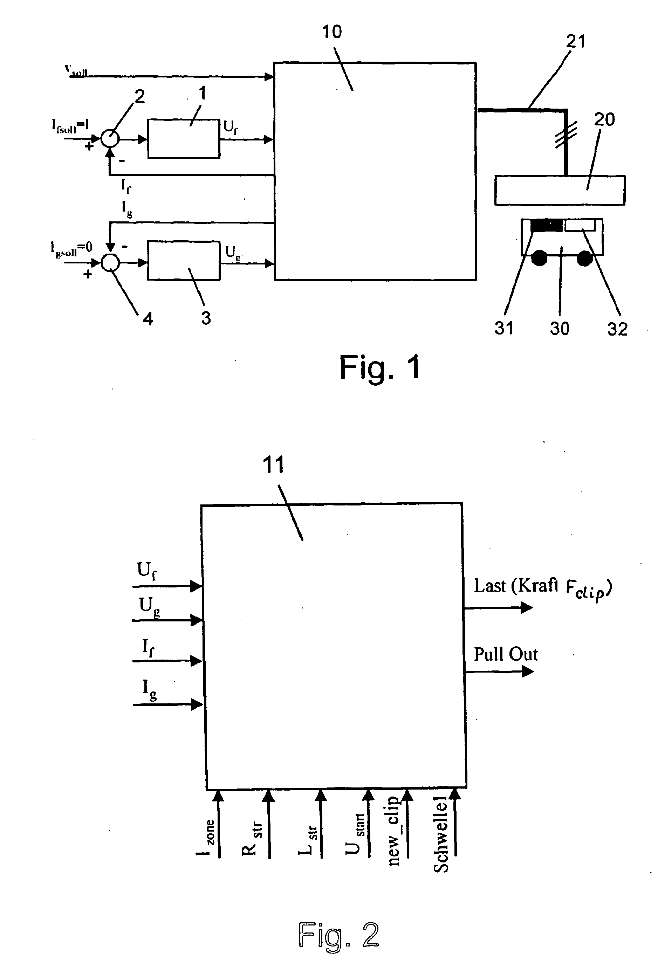

Anhand von Figur 1 wird nun die erfindungsgemäße Schaltungsanordnung näher beschrieben.

In Figur 1 ist ein Umrichter 10 dargestellt, der ein Modell zur Berechnung der Bestromung für ein Primärteil 20, ein Stellglied zur Bestromung und eine Strommesseinrichtung enthält. Das Modell berechnet die Stromwerte für einen Ausgang 21 in einem auf ein Sekundärteil 30 bezogenen Koordinatensystem mit den beiden Achsen, der Längsachse und der Querachse, entsprechend der bekannten Zweiachsentheorie, und transformiert diese Werte dann in ein Drehstromsystem. Die Sollwerte für die Ströme $I_f$, $I_g$ und die Winkel des resultierenden Raumzeigers des Modelles berechnet der Umrichter 10 aus den Sollwerten für die Spannungen in der Längsachse $U_f$ und in der Querachse $U_g$ in einem auf das Primärteil 20 bezogenen Koordinatensystem nach einer Transformation in das Koordinatensystem des Sekundärteiles 30. Weiterhin ist die Geschwindigkeit $v_{soll}$ des Sekundärteiles 30 vorgegeben. Das Rechenmodell enthält dazu die Blind- und Wirkwiderstände des Primärteiles 20 als Parameter. Das Rechenmodell ermittelt die Istwerte der Ströme in der f- Achse $I_f$ und in der g- Achse $I_g$ aus den Messwerten im Drehstromsystem und gibt sie nach Transformation in das Zweiachsensystem des Primärteiles 20 an Addierer 2 und 4. Die Differenz der Addierer 2 und 4 erhalten zwei Stromregler für die Längsachse und die Querachse, die mit 1 bzw. 3 bezeichnet sind. Am Ausgang der Stromregler 1, 3 stehen dann die Spannungen in der f-Achse $U_f$ und der g- Achse $U_g$ als Sollwerte für den Umrichterblock 10 zur Verfügung.

Die von dem Sekundärteil 30 mit zwei Magneten 31, 32 unterschiedlicher Polarität im Primärteil 20 bei Bewegung induzierte Gegenspannung führt zu einer Störung des Gleichgewichtes in den Stromreglern 1, 3, die im Stromregelkreis ausgeregelt wird. Dabei ändern sich sowohl die Istwerte des Stromes in beiden Achsen zumindest zeitweise beim Eintreten und Austreten des Sekundärteiles 30 in bzw. aus dem Primärteil 20. Die Spannungen $U_f$ und $U_g$ in beiden Achsen ändern sich ebenfalls, bleiben aber während des Aufenthaltes des Sekundärteiles 30, von Regelschwingungen und den Übergängen von einem Primärteil 20 zum anderen abgesehen, weitgehend konstant.

Die Figur 2 zeigt einen Rechenblock 11. Die Berechnung der Lastgrößen aus den Messgrößen $U_f$, $U_g$, $I_f$ und $I_g$ in der Fig. 1 erfolgt in dem Rechenblock 11, der ein Teil des Umrichters 10 sein kann. Hierzu werden zusätzlich die Parameter new_clip als Impuls für den Start der Berechnung und die wirksamen Länge des Primärteiles $I_{zone}$ für den zu speisenden Abschnitt von der übergeordneten Steuerung vorgegeben. Zwischen zwei Impulsen new_clip vergeht die Zeit $t_{clip}$.

Die Motorparameter $R_{str}$ (Widerstand des Stranges des Linearmotors) und $L_{str}$ (Induktivität des Stranges des Linearmotors) werden ebenfalls als transformierte Größen des 2-achsigen Systems vorgegeben. Ein nicht dargestellter Komparator vergleicht die intern berechneten Größen mit einem Schwellwert "Schwelle 1" und gibt bei Unterschreitung eine Meldung "Pull Out" aus.

Die Ergebnisse des Rechenblockes 11 stehen unmittelbar nach dem Impuls new_clip am Ausgang zur weiteren Auswertung zur Verfügung.

**Patentansprüche**

1. Verfahren zur Regelung von synchronen Linearmotoren, insbesondere für Linearantriebe in Folienstreckanlagen, mit mindestens einem stationären Primärteil (20) und mindestens einem längs des Primärteiles (20) verfahrbaren Sekundärteil (30), das sich zumindest zeitweise im Wirkbereich des Primärteiles (20) befindet, und mit einem dem Primärteil (20) zugeordneten Umrichter (10), wobei konstante vorgebbare Ströme zu Steuerungszwecken verwendet und Ströme und Spannungen mit Hilfe eines zweiachsigen, auf das Sekundärteil (30) mit den beiden Achsen, der Längsachse und der Querachse, bezogenen Koordinatensystems beschrieben werden, das auf das Primärteil (20) transformiert wird und nach der Transformation eine reelle f-Achse und eine imaginäre g-Achse aufweist, **dadurch gekennzeichnet, dass** die zwischen Primärteil (20) und Sekundärteil (30) wirkende Kraft ($F_{clip}$) aus den im Umrichter (10) gemessenen oder berechneten Strömen und Spannungen bestimmt wird, indem das Integral aus der Wirkleistung über eine Zeit ($t_{clip}$) zwischen zwei von einer übergeordneten Steuerung erzeugten Impulsen (new_clip) berechnet und dieses Integral durch die wirksame Länge ($I_{zone}$) des Primärteiles (20) geteilt wird, wobei der Strom ($I_f$) in der f-Achse auf einen vorgegebenen Wert und der Strom ($I_g$) in der g-Achse zu Null geregelt wird.

2. Verfahren zur Regelung von synchronen Linearmotoren, insbesondere für Linearantriebe in Folienstreckanlagen, mit mindestens einem stationären Primärteil (20) und mindestens einem längs des Primärteiles (20) verfahrbaren Sekundärteil (30), das sich zumindest zeitweise im Wirkbereich des Primärteiles (20) befindet, und mit einem dem Primärteil (20) zugeordneten Umrichter (10), wobei konstante vorgebbare Ströme zu Steuerungszwecken verwendet und Ströme und Spannungen mit Hilfe eines zweiachsigen, auf das Sekundärteil (30) mit den beiden Achsen, der Längsachse und der Querachse, gezogenen Koordinatensystems beschrieben werden, das auf das Primärteil (20) transformiert wird und nach der Transformation eine reelle f-Achse und eine imaginäre g-Achse aufweist, **dadurch gekennzeichnet, dass** die zwischen Primärteil (20) und Sekundärteil (30) wirkende Kraft ($F_{clip}$) aus den im Umrichter (10) gemessenen oder berechneten Strömen und Spannungen bestimmt wird, indem die Summe der Spannungen ($U_f$) in der f-Achse, vermindert um den Spannungsabfall ($R_{str} \cdot I_f$) an dem Widerstand ($R_{str}$) des Stranges im Primärteil (20) während der Zeit ($t_{clip}$) zwischen zwei von einer übergeordneten Steuerung erzeugten Impulsen (new_clip) berechnet und diese Summe mit dem Strom ($I_f$) in der f-Achse, dem Zeitintervall ($\Delta t$) und dem Kehrwert der Länge ($l_{zone}$) des Primärteiles (20) multipliziert wird, wobei der Strom ($I_f$) in der f-Achse auf einem vorgegebenen Wert und der Strom ($I_g$) in der g-Achse zu Null geregelt wird.

3. Verfahren nach Anspruch 1 oder 2, **dadurch gekennzeichnet, dass** die Blindkraft berechnet wird, indem die Summe der Spannungen ($U_g$) in der g-Achse, vermindert um den induktiven Spannungsabfall an den Induktivitäten im Primärteil (20) während der Zeit ($t_{clip}$) zwischen den zwei von der übergeordneten Steuerung erzeugten Impulsen (new_clip) berechnet und die so erhalten Summe mit dem Strom ($I_f$) in der f-Achse, dem Zeitintervall ($\Delta t$) und dem Kehrwert der wirksamen Länge ($l_{zone}$) des Primärteiles (20) multipliziert wird.

4. Verfahren nach Anspruch 3, **dadurch gekennzeichnet, dass** der Lastwinkel aus dem Tangens des Quotienten von Kraft ($F_{clip}$) zu Blindkraft berechnet wird.

5. Verfahren nach Anspruch 3 oder 4, **dadurch gekennzeichnet, dass** die Summe aus den Quadraten der Kraft ($F_{clip}$) und der Blindkraft mit einem vorgegebenen Schwellwert (Schwelle1) verglichen und eine Meldung (Pull Out) ausgegeben wird, wenn die so gebildete Summe den Schwellwert (Schwelle1) unterschreitet.

6. Verfahren nach einem der vorhergehenden Ansprüche, **dadurch gekennzeichnet, dass** die berechnete Kraft ($F_{clip}$) am Ende der Aufenthaltszeit des Sekundärteiles (30) im Wirkbereich des Primärteiles (20) für die Weiterverarbeitung zur Verfügung gestellt und/oder angezeigt wird.

7. Verfahren nach einem der Ansprüche 3 bis 6, **dadurch gekennzeichnet, dass** die berechnete Blindkraft am Ende der Aufenthaltszeit des Sekundärteiles (30) im Wirkbereich des Primärteiles (20) für die Weiterverarbeitung zur Verfügung gestellt und/oder angezeigt wird.

8. Verfahren nach einem der Ansprüche 5 bis 7, **dadurch gekennzeichnet, dass** die Meldung (Pull Out) am Ende der Aufenthaltszeit des Sekundärteiles (30) im Wirkbereich des Primärteiles (20) ausgegeben wird.

9. Verfahren nach einem der Ansprüche 5 bis 8, **dadurch gekennzeichnet, dass** bei Vorliegen der Meldung (Pull Out) höhere Stromwerte ($I_f$) in der f-Achse durch die übergeordnete Steuerung für den Umrichter (10) vorgegeben werden.

10. Verfahren nach einem der vorhergehenden Ansprüche, **dadurch gekennzeichnet, dass** eine Kompensation des Einflusses der Temperatur des Widerstandes ($R_{str}$) durchgeführt wird, indem die Wicklungstemperatur gemessen und in Abhängigkeit der gemessenen Wicklungstemperatur korrigierte Widerstände vorgegeben werden.

11. Verfahren nach Anspruch 1, **dadurch gekennzeichnet, dass** die berechnete Kraft ($F_{clip}$) durch Subtraktion eines tabellierten Wertes in Abhängigkeit von der Höhe des Stromes ($I_f$) in der f-Achse und der Phasendifferenz ($\alpha$) der Ströme vor und nach der Kommutierung korrigiert wird.

12. Verfahren nach Anspruch 2, **dadurch gekennzeichnet, dass** die berechnete Kraft ($F_{cilp}$) durch Auswahl eines negativen Spannungsanfangswertes ($U_{start}$) für die Summenberechnung aus einer Tabelle in Abhängigkeit von der Höhe des Stromes ($I_f$) in der f-Achse und der Phasendifferenz ($\alpha$) der Ströme vor und nach der Kommutierung korrigiert wird.

13. Verfahren nach Anspruch 2, **dadurch gekennzeichnet, dass** die berechnete Kraft ($F_{clip}$) mittels eines negativen geschätzten Spannungsanfangswertes ($U_{start}$) für die Summenberechnung korrigiert wird.

14. Verfahren nach einem der vorhergehenden Ansprüche, **gekennzeichnet durch** einen Vergleich der berechneten Kraft ($F_{clip}$) mit einem Vorgabewert, bei dessen Überschreitung die Sollwerte des Stromes ($I_f$) in der f-Achse im Primärteil (20) oder in ausgewählten Primärteilen (20) erhöht werden.

15. Schaltungsanordnung zur Regelung von synchronen Linearmotoren, insbesondere für Linearantriebe in Folienstreckanlagen, mit

- mindestens einem stationären Primärteil (20),
- mindestens einem längs des Primärteiles (20) verfahrbaren Sekundärteil (30), das sich zumindest zeitweise im Wirkbereich des Primärteiles (20) befindet,
- einem dem Primärteil (20) zugeordneten Umrichter (10),

**gekennzeichnet durch** folgende weitere Merkmale:

- es ist ein Rechenblock (11) vorgesehen, in dem eine Transformation von Strömen und Spannungen, die in einem zweiachsigen, auf das Sekundärteil (30) mit den beiden Achsen, der Längsachse und der Querachse, bezogenen Koordinatensystem beschrieben sind, auf das Primärteil (20) unter Verwendung einer reellen f-Achse und einer imaginären g-Achse vorgenommen wird,
- der Rechenblock (11) enthält eine Einrichtung zur.Berechnung der zwischen Primärteil (20) und Sekundärteil (30) wirkenden Kraft ($F_{clip}$) aus den im Umrichter (10) gemessenen oder berechneten Strömen und Spannungen durch Bildung des Integrals aus der Wirkleistung über eine Zeit ($t_{clip}$) zwischen zwei von einer übergeordneten Steuerung erzeugten Impulsen (new_clip) und **durch** Teilen des so gebildeten Integrals **durch** eine wirksame Länge ($l_{Zone}$) des Primärteiles (20),
- es ist eine Einrichtung vorgesehen, die den Strom ($I_f$) in der f-Achse auf einen vorgegebenen Wert und den Strom ($I_g$) in der g-Achse zu Null regelt.

**16.** Schaltungsanordnung zur Regelung von synchronen Linearmotoren, insbesondere für Linearantriebe in Folienstreckanlagen, mit.

- mindestens einem stationären Primärteil (20),
- mindestens einem längs des Primärteiles (20) verfahr-baren Sekundärteil (30), das sich zumindest zeitweise im Wirkbereich des Primärteiles (20) befindet,
- einem dem Primärteil (20) zugeordneten Umrichter (10),

**gekennzeichnet durch** folgende weitere Merkmale:

- es ist ein Rechenblock (11) vorgesehen, in dem eine Transformation von Strömen und Spannungen, die in einem zweiachsigen, auf das Sekundärteil (30) mit den beiden Achsen, der Längsachse und der Querachse, bezogenen Koordinatensystem beschrieben sind, auf das Primärteil (20) unter Verwendung einer reellen f-Achse und einer imaginären g-Achse vorgenommen wird,
- der Rechenblock (11) enthält eine Einrichtung zur Berechnung der zwischen Primärteil (20) und Sekundärteil (30) wirkenden Kraft ($F_{clip}$) aus den im Umrichter (10) gemessenen oder berechneten Strömen und Spannungen durch Bildung der Summe der Spannungen ($U_f$) in der f-Achse, vermindert um den Spannungsabfall an dem Widerstand ($R_{str}$) des Stranges im Primärteil (20), während der Zeit ($t_{clip}$) zwischen zwei von einer übergeordneten Steuerung erzeugten Impulsen (new_clip) und **durch** Multiplikation der so gebildeten Summe mit dem Strom ($I_f$) in der f-Achse, dem Zeitintervall ($\Delta t$) und dem Kehrwert der wirksamen Länge ($l_{zone}$) des Primärteiles (20),
- es ist eine Einrichtung vorgesehen, die den Strom ($I_f$) in der f-Achse auf einen vorgegebenen Wert und den Strom ($I_g$) in der g-Achse zu Null regelt.

**17.** Schaltungsanordnung nach Anspruch 15 oder 16, **dadurch gekennzeichnet, dass** der Rechenblock (11) im Umrichter (10) angeordnet ist.

**18.** Schaltungsanordnung nach Anspruch 15 oder 16, **dadurch gekennzeichnet, dass** der Rechenblock (11) außerhalb des Umrichters (10) angeordnet ist.

**Claims**

**1.** A method for controlling synchronous linear motors, in particular for linear drives in film stretching installations, having at least one stationary primary part (20) and at least one secondary part (30) which can be moved along the primary part (20) and is located in the effective area of the primary part (20) at least at times, and having a converter (10) which is associated with the primary part (20), in which case constant predetermined currents are used for control purposes, and currents and voltages are described with the aid of a two-axis coordinate system which is related to the secondary part (30) having the two axis, the longitudinal axis and the transverse axis, is transformed

to the primary part (20) and has a real f-axis and an imaginary g-axis after the transformation, **characterized in that** the force ($F_{clip}$) which acts between the primary part (20) and the secondary part (30) is determined from the currents and voltages measured or calculated in the converter (10), **in that** the integral is calculated from the real power over a time ($t_{clip}$) between two pulses (new_clip) which are produced by a higher-level control system, and this integral is divided by the effective length ($l_{zone}$) of the primary part (20), with the current ($I_f$) on the f-axis being regulated at a predetermined value and the current ($I_g$) on the g-axis being regulated at zero.

2. A method for controlling synchronous linear motors, in particular for linear drives in film stretching installations, having at least one stationary primary part (20) and at least one secondary part (30) which can be moved along the primary part (20) and is located in the effective area of the primary part (20) at least at times, and having a converter (10) which is associated with the primary part (20), in which case constant predetermined currents are used for control purposes, and currents and voltages are described with the aid of a two-axis coordinate system which is related to the secondary part (30) having the two axis, the longitudinal axis and the transverse axis, is transformed to the primary part (20) and has a real f-axis and an imaginary g-axis after the transformation, **characterized in that** the force ($F_{clip}$) which acts between the primary part (20) and the secondary part (30) is determined from the currents and voltages measured or calculated in the converter (10), **in that** the sum of the voltages ($U_f$) on the f-axis is calculated minus the voltage drop ($R_{str}.I_f$) across the resistance ($R_{str}$) of the winding section in the primary part (20) during the time ($t_{clip}$) between two pulses (new_clip) which are produced by a higher-level control system, and this sum is multiplied by the current ($I_f$) on the f-axis, the time interval ($\Delta t$) and the reciprocal of the length ($l_{zone}$) of the primary part (20), with the current ($I_f$) on the f-axis being regulated at a predetermined value, and the current ($I_g$) on the g-axis being regulated at zero.

3. The method as claimed in claim 1 or 2, **characterized in that** the reactive force is calculated by calculating the sum of the voltages ($U_g$) on the g-axis minus the inductive voltage drop across the inductances in the primary part (20) during the time ($t_{clip}$) between the two pulses (new_clip) which are produced by the higher-level control system, and by multiplying the sum obtained in this way by the current ($I_f$) on the f axis, the time interval ($\Delta t$) and the reciprocal of the effective length ($l_{zone}$) of the primary part (20).

4. The method as claimed in claim 3, **characterized in that** the load angle is calculated from the tangent of the quotient of the force ($F_{cilp}$) to the reactive force.

5. The method as claimed in claim 3 or 4, **characterized in that** the sum of the squares of the force ($F_{clip}$) and of the reactive force is compared with a predetermined threshold value (threshold1), and a (Pull Out) message is emitted if the sum formed in this way is less than the threshold value (threshold1).

6. The method as claimed in one of the preceding claims, **characterized in that** the calculated force ($F_{clip}$) at the end of the time in which the secondary part (30) is located in the effective area of the primary part (20) is made available for further processing, and/or is indicated.

7. The method as claimed in one of claims 3 to 6, **characterized in that** the calculated reactive force at the end of the time in which the secondary part (30) is located in the effective area of the primary part (20) is made available for further processing and/or is indicated.

8. The method as claimed in one of claims 5 to 7, **characterized in that** the (Pull Out) message is emitted at the end of the time in which the secondary part (30) is located in the effective area of the primary part (20).

9. The method as claimed in one of claims 5 to 8, **characterized in that**, when the (Pull Out) message is present, higher current values ($I_f$) are predetermined on the f axis by the higher-level control system for the converter (10).

10. The method as claimed in one of the preceding claims, **characterized in that** the influence of the temperature of the resistance ($R_{str}$) is compensated for by measuring the winding temperature and by predetermining corrected resistances as a function of the measured winding temperature.

11. The method as claimed in claim 1, **characterized in that** the calculated force ($F_{clip}$) is corrected by subtraction of a tabulated value as a function of the magnitude of the current ($I_f$) on the f axis and the phase difference ($\alpha$) between the currents before and after commutation.

12. The method as claimed in claim 2, **characterized in that** the calculated force ($F_{clip}$) is corrected by selection of a negative initial voltage value ($U_{start}$) for the sum calculation from a table as a function of the magnitude of the current ($I_f$) on the f-axis and the phase difference ($\alpha$) between the currents before and after commutation.

13. The method as claimed in claim 2, **characterized in that** the calculated force ($F_{clip}$) is corrected by means of a negative estimated initial voltage value ($U_{start}$) for the sum calculation.

14. The method as claimed in one of the preceding claims, **characterized by** the calculated force ($F_{clip}$) being compared with a preset value, with the nominal values of the current ($I_f$) on the f-axis in the primary part (20) or in selected primary parts (20) being increased if this preset value is exceeded.

15. A circuit arrangement for controlling synchronous linear motors, in particular for linear drives in film stretching installations, having

   - at least one stationary primary part (20),
   - at least one secondary part (30) which can be moved along the primary part (20) and is located in the effective area of the primary part (20) at least at times,
   - a converter (10) which is associated with the primary part (20),

   **characterized by** the following further features:

   - a computation block (11) is provided in which a transformation of currents and voltages which are described in a two-axis coordinate system related to the secondary part (30) having the two axis, the longitudinal axis and the transverse axis, is carried out to the primary part (20) using a real f-axis and an imaginary g-axis,
   - the computation block (11) contains a device for calculation of the force ($F_{clip}$) acting between the primary part (20) and the secondary part (30) from the currents and voltages as calculated or as measured in the converter (10), by formation of the integral of the real power over a time ($t_{clip}$) between two pulses (new_clip) which are produced by a higher-level control system, and by division of the integral formed in this way by the effective length ($I_{zone}$) of the primary part (20),
   - a device is provided which regulates the current ($I_f$) on the f-axis at a predetermined value, and regulates the current ($I_g$) on the g-axis at zero.

16. A circuit arrangement for controlling synchronous linear motors, in particular for linear drives in film stretching installations, having

   - at least one stationary primary part (20),
   - at least one secondary part (30) which can be moved along the primary part (20) and is located in the effective area of the primary part (20) at least at times,
   - a converter (10) which is associated with the primary part (20),

   **characterized by** the following further features:

   - a computation block (11) is provided in which a transformation of currents and voltages which are described in a two-axis coordinate system related to the secondary part (30) having the two axis, the longitudinal axis and the transverse axis, is carried out to the primary part (20) using a real f-axis and an imaginary g-axis,
   - the computation block (11) contains a device for calculation of the force ($F_{clip}$) acting between the primary part (20) and the secondary part (30) from the currents and voltages as calculated or as measured in the converter (10), by formation of the sum of the voltages ($U_f$) on the f-axis minus the voltage drop across the resistance ($R_{str}$) of the winding section in the primary part (20) during the time ($t_{clip}$) between two pulses (new_clip) produced by a higher-level control system, and by multiplication of the sum formed in this way by the current ($I_f$) on the f axis, the time interval ($\Delta t$) and the reciprocal of the effective length ($I_{zone}$) of the primary part (20),
   - a device is provided which regulates the current ($I_f$) on the f-axis at a predetermined value, and regulates the current ($I_g$) on the g-axis at zero.

17. The circuit arrangement as claimed in claim 15 or 16, **characterized in that** the computation block (11) is arranged in the converter (10).

18. The circuit arrangement as claimed in claim 15 or 16, **characterized in that** the computation block (11) is arranged outside the converter (10).

**Revendications**

1. Procédé pour la régulation de moteurs linéaires synchrones, en particulier pour des entraînements linéaires dans des installations d'étirage de films, comprenant au moins une partie primaire stationnaire (20) et au moins une partie secondaire (30) déplaçable le long de la partie primaire (20) et se trouvant au moins temporairement dans la zone d'action de la partie primaire (20), et comprenant un convertisseur (10) associé à la partie primaire (20), dans lequel on utilise à des fins de commande des courants prédéterminés constants et les courants et les tensions sont décrits à l'aide d'un système de coordonnées à deux axes qui se réfère à la partie secondaire (30) avec les deux axes, c'est-à-dire l'axe longitudinal et l'axe transversal, ledit système de coordonnées étant transformé sur la partie primaire (20) et comporte après la transformation un axe f réel et un axe g imaginaire, **caractérisé en ce que** la force ($F_{clip}$) agissant entre la partie primaire (20) et la partie secondaire (30) est déterminée à partir de courants et de tensions mesurés ou calculés dans le convertisseur (10), en calculant l'intégrale de la puissance active tendant un temps ($t_{clip}$) entre deux impulsions (new_clip) engendrées par une commande maîtresse, et cette intégrale est divisée par la longueur active ($I_{zone}$) de la partie primaire (20), et le courant ($I_f$) dans l'axe f est régulé à une valeur prédéterminée, et le courant ($I_g$) dans l'axe g est régulé à zéro.

2. Procédé pour la régulation de moteurs linéaires synchrones, en particulier pour des entraînements linéaires dans des installations d'étirage de films, comprenant au moins une partie primaire stationnaire (20) et au moins une partie secondaire (30) déplaçable le long de la partie primaire (20) et se trouvant au moins temporairement dans la zone d'action de la partie primaire (20), comprenant un convertisseur (10) associé à la partie primaire (20), dans lequel on utilise à des fins de commande des courants prédéterminés constants et les courants et les tensions sont décrits à l'aide d'un système de coordonnées à deux axes qui se réfèrent à la partie secondaire (30) avec les deux axes, c'est-à-dire l'axe longitudinal et l'axe transversal, ledit système de coordonnées étant transformé sur la partie primaire (20) et comporte après la transformation un axe f réel et un axe g imaginaire, **caractérisé en ce que** la force ($F_{clip}$) agissant entre la partie primaire (20) et la partie secondaire (30) est déterminée à partir des courants et des tensions mesurées ou calculées dans le convertisseur (10), en calculant la somme des tensions ($U_f$) dans l'axe f, réduite de la chute de tension ($R_{str} \cdot I_f$) au niveau de la résistance ($R_{str}$) du brin dans la partie primaire (20) pendant le temps ($t_{clip}$) entre deux impulsions (new_clip) engendrées par une commande maîtresse, et cette somme est multipliée par le courant ($I_f$) dans l'axe f, par l'intervalle temporel ($\Delta t$) et par la valeur inverse de la longueur ($I_{zone}$) de la partie primaire (20), dans lequel le courant ($I_f$) dans l'axe f est régulé à une valeur prédéterminée et le courant ($I_g$) dans l'axe g est régulé à zéro.

3. Procédé selon la revendication 1 ou 2, **caractérisé en ce que** l'on calcule la force réactive en calculant la somme des tensions ($U_g$) dans l'axe g, diminuée de la chute de tension inductive au niveau des inductances dans la partie primaire (20) pendant le temps ($t_{clip}$) entre les deux impulsions (new_clip) engendrées par la commande maîtresse, et la somme ainsi obtenue est multipliée par le courant ($I_f$) dans l'axe f, par l'intervalle temporel ($\Delta t$), et par la valeur inverse de la longueur efficace ($I_{zone}$) de la partie primaire (20).

4. Procédé selon la revendication 3, **caractérisé en ce que** l'angle de charge est calculé à partir de la tangente du quotient de la force ($F_{clip}$) sur la force réactive.

5. Procédé selon la revendication 3 ou 4, **caractérisé en ce que** la somme des carrés de la force ($F_{clip}$) et de la force réactive est comparée avec une valeur seuil prédéterminée (seuil 1), et on délivre une information (PullOut) lorsque la somme ainsi formée passe au-dessous de la valeur seuil (seuil 1).

6. Procédé selon l'une des revendications précédentes, **caractérisé en ce que** la force calculée ($F_{clip}$) est mise à disposition pour la poursuite du traitement et/ou affichée à la fin de la durée de séjour de la partie secondaire (30) dans la zone d'action de la partie primaire (20).

7. Procédé selon l'une des revendications 3 à 6, **caractérisé en ce que** la force réactive calculée est mise à disposition pour la poursuite du traitement et/ou affichée à la fin de la durée de séjour de la partie secondaire (30) dans la zone d'action de la partie primaire (20).

8. Procédé selon l'une des revendications 5 à 7, **caractérisé en ce que** l'information (PullOut) est fournie à la fin de la durée de séjour de la partie secondaire (30) dans la zone d'action de la partie primaire (20).

9. Procédé selon l'une des revendications 5 à 8, **caractérisé en ce que**, en présence de l'information (PullOut), des valeurs de courant plus élevées ($I_f$) sont imposées dans l'axe f par la commande maîtresse pour le convertisseur (10).

**10.** Procédé selon l'une des revendications précédentes, **caractérisé en ce que** l'on exécute une compensation de l'influence de la température de la résistance ($R_{str}$), en mesurant la température du bobinage et en imposant des résistances corrigées en fonction de la température de bobinage mesurée.

**11.** Procédé selon la revendication 1, **caractérisé en ce que** la force calculée ($F_{cilp}$) est corrigée par soustraction d'une valeur dans un tableau en fonction de l'intensité du courant ($I_f$) dans l'axe f et de la différence de phase ($\alpha$) des courants avant et après la commutation.

**12.** Procédé selon la revendication 2, **caractérisé en ce que** la force calculée ($F_{clip}$) est corrigée par sélection d'une valeur de départ de tension négative ($U_{stat}$) pour le calcul de somme à partir d'un tableau en fonction de l'intensité du courant ($I_f$) dans l'axe f et de la différence de phase ($\alpha$) des courants avant et après la commutation.

**13.** Procédé selon la revendication 2, **caractérisé en ce que** la force calculée ($F_{clip}$) est corrigée au moyen d'une valeur de départ de tension estimée négative ($U_{start}$) pour le calcul de la somme.

**14.** Procédé selon l'une des revendications précédentes, **caractérisé par** une comparaison de la force calculée ($F_{clip}$) avec une valeur préétablie, et lors de son dépassement, les valeurs de consigne du courant ($I_f$) dans l'axe f dans la partie primaire (20) ou dans des parties primaires sélectionnées (20) sont augmentées.

**15.** Agencement de circuit pour la régulation de moteurs linéaires synchrones, en particulier pour des entraînements linéaires dans des installations d'étirage de films, comprenant :

- au moins une partie primaire stationnaire (20),
- au moins une partie secondaire (30) déplaçable le long de la partie primaire (20) et se trouvant au moins temporairement dans la zone d'action de la partie primaire (20),
- un convertisseur (10) associé à la partie primaire (20),

**caractérisé par** les autres éléments techniques suivants :

- il est prévu un bloc de calcul (11) dans lequel on exécute une transformation des courants et des tensions, qui sont décrits dans un système de coordonnées à deux axes, qui se réfèrent à la partie secondaire (30) avec les deux axes, c'est-à-dire l'axe longitudinal et l'axe transversal, vers la partie primaire (20) en utilisant un axe f réel et un axe g imaginaire,
- le bloc de calcul (11) contient des moyens pour calculer la force ($F_{clip}$) agissant entre la partie primaire (20) et la partie secondaire (30), à partir des courants et des tensions mesurés ou calculés dans le convertisseur (10), pour former l'intégrale de la puissance de travail pendant un temps ($t_{clip}$) entre deux impulsions (new_clip) engendrées par une commande maîtresse, et par division de l'intégrale ainsi formée par une longueur efficace ($I_{zone}$) de la partie primaire (20), et

il est prévu des moyens qui régulent le courant ($I_f$) dans l'axe f à une valeur prédéterminée et le courant ($I_g$) dans l'axe g à zéro.

**16.** Agencement de circuit pour réguler des moteurs linéaires synchrones, en particulier des entraînements linéaires dans des installations d'étirage de films, comprenant :

- au moins une partie primaire stationnaire (20),
- au moins une partie secondaire (30) déplaçable le long de la partie primaire (20) et se trouvant au moins temporairement dans la zone d'action de la partie primaire (20),
- un convertisseur (10) associé à la partie primaire (20),

**caractérisé par** les éléments techniques suivants :

- il est prévu un bloc de calcul (11), dans lequel on exécute une transformation de courant et de tension, qui sont décrits dans un système de coordonnées à deux axes, par référence à la partie secondaire (30) avec les deux axes, c'est-à-dire l'axe longitudinal et l'axe transversal, vers la partie primaire (20) en utilisant un axe réel f et un axe imaginaire g,
- le bloc de calcul (11) contient des moyens pour le calcul de la force ($F_{clip}$) agissant entre la partie primaire (20) et la partie secondaire (30), à partir des courants et des tensions mesurés ou calculés dans le convertisseur (10), par formation de la somme des tensions ($U_f$) dans l'axe f, diminuée de la chute de tension au niveau de la résistance ($R_{str}$) du brin dans la partie primaire (20), pendant le temps ($t_{clip}$) entre deux impulsions (new_ clip) engendrées par une commande maîtresse, et par multiplication de la somme ainsi formée par le courant ($I_f$) dans l'axe f, par l'intervalle temporel ($\Delta t$), et par la valeur inverse de la longueur efficace ($I_{zone}$) de la partie primaire (20), et

- il est prévu des moyens qui régulent le courant ($I_f$) dans l'axe f à une valeur prédéterminée et le courant ($I_g$) dans l'axe g à zéro.

**17.** Agencement de circuit selon la revendication 15 ou 16, **caractérisé en ce que** le bloc de calcul (11) est agencé dans le convertisseur (10).

**18.** Agencement de circuit selon les revendications la revendication 15 ou 16, **caractérisé en ce que** le bloc de calcul (11) est agencé à l'extérieur du convertisseur (10).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9939430 A
- WO 0079675 A
- DE 19747412 A1
- DE 19751375 A1
- DE 19634449 C2
- US 4303870 A

**In der Beschreibung aufgeführte Nicht-Patentliteratur**

- **M.J. CORLEY ; R.D. LORENZ.** Rotor Position and Velocity Estimation for a Permanent Magnet Synchronous Machine at Standstill and High Speeds. IEEE, 1996, 36-41
- **P. VAS.** Sensorless Vector and Direct Torque Control. Oxford University Press, 1998